# EUROPEAN PATENT APPLICATION

(11) **EP 4 803 981 A1**
(43) Date of publication of application: **09.09.2026**
(21) Application number: 26151857.5
(22) Date of filing: 14.01.2026
(51) Int. Cl.: G06F 3/01, G02B 27/00, G02B 27/01, G06F 1/16, G06F 1/3215, G06F 1/3234, H04N 23/65

(54) **PREDICTING IMAGE CAPTURE IN A HEAD-MOUNTED DEVICE**

(30) Priority: 05.03.2025 US 202563767434 P; 04.12.2025 US 202519408788
(71) Applicant: Apple Inc., Cupertino, CA 95014 (US)
(72) Inventor: GARDINER, Shannon L., Cupertino, 95014 (US); JUVEKAR, Chiraag, Cupertino, 95014 (US); SANGHI, Karan, Cupertino, 95014 (US)
(74) Representative: Zacco Denmark A/S

(57) **Abstract**

A head-mounted device is provided that includes one or more image sensors, a first processing circuit configured to run an operating system for the head-mounted device, a second processing circuit configured to direct the one or more image sensors to capture images, one or more components configured to predict a user input for image capture, and a third processing circuit configured to wake up the second processing circuit from a sleep state in response to predicting the user input. The image sensors can output captured images to image signal processing (ISP) circuitry. The ISP circuitry can include computer vision processing (CVP) circuitry that receives the captured images and having subsystems operating in a first power domain and a backend image signal processing pipeline operating in a second power domain different than the first power domain.

## Description

### Field

This disclosure relates generally to electronic devices and, more particularly, to head-mounted devices with one or more cameras.

### Background

Some electronic devices can be mounted on a user's head. Such type of electronic devices can be referred to as head-mounted devices. A head-mounted device can include cameras for capturing images of the surrounding physical environment. It is within this context that the embodiments herein arise.

### Summary

An aspect of the disclosure provides a head-mounted device that includes one or more image sensors, a first processing circuit configured to run an operating system for the head-mounted device, a second processing circuit configured to direct the one or more image sensors to capture images, one or more components configured to predict a user input for image capture, and a third processing circuit configured to wake up the second processing circuit from a sleep state in response to predicting the user input for image capture. The third processing circuit is further configured to detect the user input for image capture and to subsequently wake up the first processing circuit from a sleep state in response to detecting the user input for image capture. The one or more components for predicting the user input for image capture can include an inertial measurement unit (IMU) configured to detect a motion pattern indicative of a button press at the head-mounted device, a microphone configured to detect a phrase preceding an image capture, a gaze sensor configured to detect a point of gaze moving towards a virtual button presented by a display of the head-mounted device, and/or a context vision subsystem configured to detect a scenario in which an image is likely to be taken.

An aspect of the disclosure provides a method of operating a head-mounted device having a first processor, a second processor, and a third processor. The method includes: predicting a user input for image capture; with the third processor, waking up the second processor in response to predicting the user input for image capture; in response to the second processor waking up from a sleep state to a wake state, using a camera driver running on the second processor to direct one or more image sensors to begin capturing images; and with the third processor, detecting the user input for image capture after the one or more image sensors have begun capturing images. The method can further include using the third processor to wake up the first processor in response to detecting the user input for image capture. Detecting the user input for image capture can include detecting depression of a button on the head-mounted device.

An aspect of the disclosure can include operating a head-mounted device having a first processor, a second processor, and a third processor. The method can include: predicting an event; with the third processor, waking up the second processor in response to predicting the event without waking up the first processor; and with the third processor, detecting an occurrence of the event and subsequently waking up the first processor in response to detecting the occurrence of the event. The event can be a user input for image capture. The first processor can be an application processor configured to run an operating system for the head-mounted device. The second processor, upon waking up, can be configured to direct one or more image sensors in the head-mounted device to begin capturing images. The one or more image sensors can be configured to begin capturing images before the third processor detects the occurrence of the event.

### Brief Description of the Drawings

FIG. 1 is a diagram of an illustrative system having a transparent display in accordance with some embodiments.
FIG. 2 is a diagram showing illustrative hardware components that can be included within a system of the type shown in FIG. 1 in accordance with some embodiments.
FIG. 3 is a diagram showing how an illustrative system can include multiple processors for orchestrating a low-latency image capture in accordance with some embodiments.
FIG. 4 is a flowchart of illustrative steps for operating a system of the type shown in FIGS. 1-3 in accordance with some embodiments.
FIG. 5 is a flowchart of illustrative steps for predicting image capture prior to detecting a user input in accordance with some embodiments.
FIG. 6 is a diagram showing various ways for predicting or anticipating an image capture in accordance with some embodiments.

### Detailed Description

A physical environment can refer to a physical world that people can sense and/or interact with without aid of electronic devices. The physical environment may include physical features such as a physical surface or a physical object. For example, the physical environment corresponds to a physical park that includes physical trees, physical buildings, and physical people. People can directly sense and/or interact with the physical environment such as through sight, touch, hearing, taste, and smell.

In contrast, an extended reality (XR) environment refers to a wholly or partially simulated environment that people sense and/or interact with via an electronic device. For example, an XR environment may include augmented reality (AR) content, mixed reality (MR) content, virtual reality (VR) content, and/or the like. With an XR system, a subset of a person's physical motions, or representations thereof, are tracked, and, in response, one or more characteristics of one or more virtual objects simulated in the XR environment are adjusted in a manner that comports with at least one law of physics.

As one example, the XR system may detect head movement and, in response, adjust graphical content and an acoustic field presented to the person in a manner similar to how such views and sounds would change in a physical environment. As another example, the XR system may detect movement of the electronic device presenting the XR environment (e.g., a mobile phone, a tablet, a laptop, or the like) and, in response, adjust graphical content and an acoustic field presented to the person in a manner similar to how such views and sounds would change in a physical environment. In some situations (e.g., for accessibility reasons), the XR system may adjust characteristic(s) of graphical content in the XR environment in response to representations of physical motions (e.g., vocal commands).

There are many different types of electronic systems that enable a person to sense and/or interact with various XR environments. Examples include head mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers. A head mountable system may have one or more speaker(s) and an integrated opaque display. Alternatively, a head mountable system may be configured to accept an external opaque display (e.g., a smartphone). The head mountable system may incorporate one or more imaging sensors to capture images or video of the physical environment, and/or one or more microphones to capture audio of the physical environment.

Rather than an opaque display, a head mountable system may have a transparent or translucent display. The transparent or translucent display may have a medium through which light representative of images is directed to a person's eyes. The display may utilize digital light projection, organic light-emitting diodes (OLEDs), LEDs, micro light-emitting diodes (uLEDs), liquid crystal on silicon, laser scanning light source, or any combination of these technologies. The medium may be an optical waveguide, a hologram medium, an optical combiner, an optical reflector, or any combination thereof. In some implementations, the transparent or translucent display may be configured to selectively become opaque. Projection-based systems may employ retinal projection technology that projects graphical images onto a person's retina. Projection systems also may be configured to project virtual objects into the physical environment, for example, as a hologram or on a physical surface. A display in device 10 is optional and can be omitted, if desired.

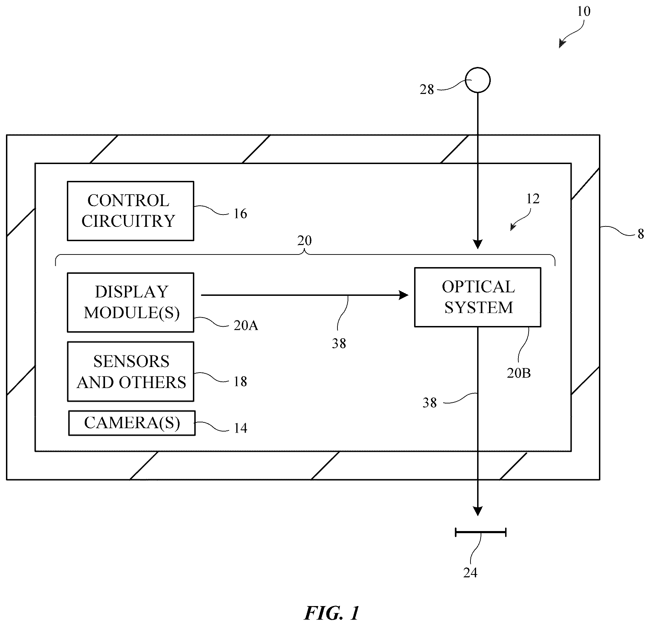

System 10 (sometimes referred to as electronic device 10, head-mounted device 10, etc.) of FIG. 1 may be a head-mounted device (HMD) having one or more displays. The displays in system 10 may include displays 20, sometimes referred to as near-eye displays, mounted within support structure (housing) 8. Support structure 8 may have the shape of a pair of eyeglasses or goggles (e.g., supporting frames), may form a housing having a helmet shape, or may have other configurations to help in mounting and securing the components of near-eye displays 20 on the head or near the eye of a user. Near-eye displays 20 may include one or more display modules such as display modules 20A and one or more optical systems such as optical systems 20B. Display modules 20A may be mounted in a support structure such as support structure 8. Each display module 20A may emit light 38 (image light) that is redirected towards a user's eyes at eye box 24 using an associated one of optical systems 20B. Displays 20 are optional and can be omitted from device 10.

The operation of system 10 may be controlled using control circuitry 16. Processing circuitry in control circuitry 16 may be used to control the operation of device 10. The processing circuitry may be based on one or more microprocessors, microcontrollers, digital signal processors, baseband processors, power management units, audio chips, application-specific integrated circuits, etc. Control circuitry 16 may be configured to perform operations in system 10 using hardware (e.g., dedicated hardware or circuitry), firmware, and/or software. Software code for performing operations in system 10 and other data can be stored on non-transitory computer readable storage media (e.g., tangible computer readable storage media) in control circuitry 16. The software code may sometimes be referred to as software, data, program instructions, instructions, or code. The non-transitory computer readable storage media (sometimes referred to generally as memory) may include non-volatile memory such as non-volatile random-access memory (NVRAM), one or more hard drives (e.g., magnetic drives or solid state drives), one or more removable flash drives or other removable media, or the like. Software stored on the non-transitory computer readable storage media may be executed on the processing circuitry of control circuitry 16. Control circuitry 16 having both storage circuitry and processing circuitry is sometimes referred to collectively as storage and processing circuitry.

System 10 may include input-output circuitry such as input-output devices 12. Input-output devices 12 may be used to allow data to be received by system 10 from external equipment (e.g., a tethered computer, a portable device such as a handheld device or laptop computer, or other electrical equipment) and to allow a user to provide head-mounted device 10 with user input. Input-output devices 12 may also be used to gather information on the environment in which system 10 (e.g., head-mounted device 10) is operating. Output components in devices 12 may allow system 10 to provide a user with output and may be used to communicate with external electrical equipment. Input-output devices 12 may include one or more cameras 14, sometimes referred to as image sensors. Cameras 14 may be used for gathering images of physical objects that are optionally digitally merged with virtual objects on a display in system 10. Input-output devices 12 may include sensors and other components 18 (e.g., accelerometers, gyroscopes, depth sensors, light sensors, haptic output devices, speakers, microphones, batteries, wireless communications circuits for communicating between system 10 and external electronic equipment, etc.).

Cameras 14 that are mounted on a front face of system 10 and that face outwardly (towards the front of system 10 and away from the user) may sometimes be referred to herein as outward-facing, external-facing, forward-facing, or front-facing cameras. Cameras 14 may capture visual odometry information, image information that is processed to locate objects in the user's field of view (e.g., so that virtual content can be registered appropriately relative to real-world objects), image content that is displayed in real time for a user of system 10, and/or other suitable image data. For example, outward-facing cameras may allow system 10 to monitor movement of the system 10 relative to the environment surrounding system 10 (e.g., the cameras may be used in forming a visual odometry system or part of a visual inertial odometry system). Outward-facing cameras may also be used to capture images of the environment that are displayed to a user of the system 10. If desired, images from multiple outward-facing cameras may be merged with each other and/or outward-facing camera content can be merged with computer-generated content for a user.

Display modules 20A may be liquid crystal displays, organic light-emitting diode displays, laser-based displays, or displays of other types. Optical systems 20B may form lenses that allow a viewer (see, e.g., a viewer's eyes at eye box 24) to view images on display(s) 20. There may be two optical systems 20B (e.g., for forming left and right lenses) associated with respective left and right eyes of the user. A single display 20 may produce images for both eyes or a pair of displays 20 may be used to display images. In configurations with multiple displays (e.g., left and right eye displays), the focal length and positions of the lenses formed by system 20B may be selected so that any gap present between the displays will not be visible to a user (e.g., so that the images of the left and right displays overlap or merge seamlessly).

If desired, optical system 20B may contain a transparent structure (e.g., an optical combiner, etc.) that allows image light from physical objects 28 to be combined optically with virtual (computer-generated) images such as virtual images in image light 38. Light from physical objects 28 in the physical environment or scene can sometimes be referred to and defined herein as world light, scene light, ambient light, external light, or environmental light. In this type of system, a user of system 10 may view both the physical environment around the user and computer-generated content that is overlaid on top of the physical environment. Cameras 14 may also be used in device 10 (e.g., in an arrangement in which a camera captures images of physical object 28 and this content is modified and presented as virtual content at optical system 20B).

System 10 may, if desired, include wireless circuitry and/or other circuitry to support communications with a computer or other external equipment (e.g., a computer that supplies display 20 with image content). During operation, control circuitry 16 may supply image content to display 20. The content may be remotely received (e.g., from a computer or other content source coupled to system 10) and/or may be generated by control circuitry 16 (e.g., text, other computer-generated content, etc.). The content that is supplied to display 20 by control circuitry 16 may be viewed by a viewer at eye box 24.

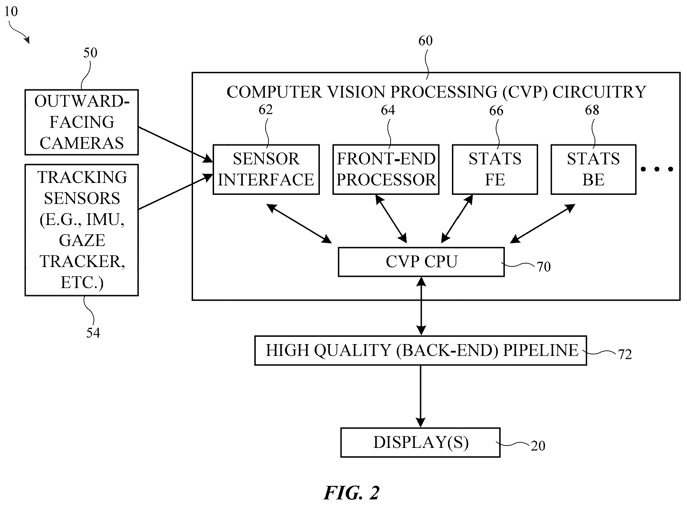

FIG. 2 is a diagram showing illustrative hardware components that can be included within a system (e.g., device 10) of the type described in connection with FIG. 1. As shown in FIG. 2, device 10 can include one or more hardware and/or software subsystems, including one or more outward-facing image sensing subsystems such as outward-facing cameras 50, one or more tracking subsystems such as tracking sensors 54, computer vision processing (CVP) circuitry such as CVP circuitry 60, a separate image signal processing pipeline such as high quality (back-end) pipeline 72, and one or more display(s) 20.

One or more cameras 50 can be used to gather information on the external real-world environment or scene surrounding device 10. Cameras 50 may include one or more of front-facing cameras 14 in FIG. 1. At least some of cameras 50 can be configured to capture one or more images of a scene, which can optionally be presented as a live video passthrough feed to the user using displays 20. Cameras 50 may include color image sensors and/or optionally monochrome (black and white) image sensors.

Cameras 50 can have different fields of view. Some cameras 50 can have a wide or ultrawide field of view, whereas some cameras 50 can have relatively narrower field of view. Not all of cameras 50 need to be used for capturing passthrough content. Some of the cameras 50 may be forward facing (e.g., oriented towards the scene in front of the user); some of the cameras 50 may be downward facing (e.g., oriented towards the user's torso, hands, or other parts of the user); some of the cameras 50 may be side/lateral facing (e.g., oriented towards the left and right sides of the user); and some of the cameras 50 can be oriented in other directions relative to the front face of device 10. All of these cameras 50 that are configured to gather information on the external physical environment surrounding device 10 are sometimes referred to and defined collectively as "external-facing" or "outward-facing" cameras.

Tracking sensors 54 can include a gaze tracking subsystem, sometime referred to as a gaze tracker, that is configured to gather gaze information or point-of-gaze information. The gaze tracker may employ one or more "inward-facing" camera(s) and/or other gaze-tracking components (e.g., eye-facing components and/or other light sources that emit beams of light so that reflections of the beams from a user's eyes may be detected) to monitor the user's eyes. One or more gaze-tracking sensor(s) 54 may face a user's eyes and may track a user's gaze. A camera in a gaze-tracking subsystem may determine the location of a user's eyes (e.g., the centers of the user's pupils), may determine the direction in which the user's eyes are oriented (the direction of the user's gaze), may determine the user's pupil size (e.g., so that light modulation and/or other optical parameters and/or the amount of gradualness with which one or more of these parameters is spatially adjusted and/or the area in which one or more of these optical parameters is adjusted based on the pupil size), may be used in monitoring the current focus of the lenses in the user's eyes (e.g., whether the user is focusing in the near field or far field, which may be used to assess whether a user is day dreaming or is thinking strategically or tactically), and/or other gaze information. Gaze tracking cameras may sometimes be referred to as inward-facing cameras, gaze-detection cameras, eye-tracking cameras, gaze-tracking cameras, or eye-monitoring cameras. If desired, other types of optical sensors (e.g., infrared and/or visible light-emitting diodes and light detectors, etc.) may also be used in monitoring a user's gaze.

Tracking sensors 54 can also include a face and body tracking subsystem configured to perform face tracking (e.g., to capture images of the user's jaw, mouth, etc. while the device is worn on the head of the user) and body tracking (e.g., by capturing images of the user's torso, arms, hands, legs, etc. while the device is worn on the head of user). If desired, the face and body tracking subsystem can also track a user's head pose by directly determining any movement, yaw, pitch, roll, etc. for head-mounted device 10. The yaw, roll, and pitch of the user's head may collectively define a user's "head pose." For example, tracking sensors 54 can include an inertial measurement unit (IMU). The inertial measurement unit can include one or more gyroscopes, gyrocompasses, accelerometers, magnetometers, other inertial sensors, and other position and motion sensors. These position and motion sensors may assume that head-mounted device 10 is mounted on the user's head. Therefore, references herein to head pose, head movement, yaw of the user's head (e.g., rotation around a vertical axis), pitch of the user's head (e.g., rotation around a side-to-side axis), roll of the user's head (e.g., rotation around a front-to-back axis), etc. may be considered interchangeable with references to device pose, device movement, yaw of the device, pitch of the device, roll of the device, etc. In certain embodiments, tracking sensors 54 may also include six degrees of freedom (DoF) tracking subsystems. Six DoF tracking subsystems or sensors can be used to monitor both rotational movement such as roll, pitch, and yaw and also positional/translational movement in a 3D environment.

Tracking sensors 54 can optionally further include a hands tracking subsystem, sometimes referred to as a hands tracker, configured to monitor a user's hand motion/gesture to obtain hand gestures data. For example, the hands tracker may include a camera and/or other gestures tracking components (e.g., outward facing components and/or light sources that emit beams of light so that reflections of the beams from a user's hand may be detected) to monitor the user's hand(s). One or more hands-tracking sensor(s) may be directed towards a user's hands and may track the motion associated with the user's hand(s), may determine whether the user is performing a tapping or swiping motion with his/her fingertips or hand(s), may determine whether the user is performing a non-contact button press or object selection operation with his/her hand(s), may determine whether the user is performing a grabbing or gripping motion with his/her hand(s), may determine whether the user is pointing at or pinching at a given object that is presented on display 20 using his/her hand(s) or fingers, may determine whether the user is performing a waving or bumping motion with his/her hand(s), or may generally measure/monitor three-dimensional non-contact gestures ("air gestures") associated with the user's hand(s). Tracking sensors 54 operable to obtain gaze, pose, hands gesture, and other information relating to a motion of a user of device 10 are sometimes referred to collectively as "user-tracking" sensors.

The example of FIG. 2 in which outward-facing cameras 50 and tracking sensors 54 (e.g., optical sensors employed to obtain gaze, pose, and/or other user-related data) are shown as separate independent subsystems is illustrative. In some embodiments, one or more of external-facing cameras 50 can also be employed to obtain pose information, location information, and/or other motion/position information associated with device 10. To help protect the privacy of users, any personal user information that is gathered by sensors may be handled using best practices. These best practices including meeting or exceeding any privacy regulations that are applicable. Opt-in and opt-out options and/or other options may be provided that allow users to control usage of their personal data.

Electronic device 10 can be configured to gather contextual information of the surrounding real-world (physical) environment or scene. Gathering contextual information can, for example, include identifying one or more objects of interest in the environment, detecting when the user has entered a particular room or environment, detecting when the user is engaging in a particular activity, detecting a current location of device 10, detecting a current user context or usage scenario (e.g., detecting if the user is currently watching a movie, playing a video game, or talking to another person or avatar), and/or determining other contextual information relating to the operation of device 10. Gathering contextual information may involve capturing one or more images using outward-facing cameras 50 and/or obtaining data from tracking sensors 54. Such images being captured for contextual purposes need not be output by displays 20 for human consumption. As such, the processing requirements and complexity for handling such images may be less than traditional image signal processing steps required for processing images that are being output by the displays for human consumption (viewing).

In accordance with an embodiment, image signal processing circuitry on device 10 can be segmented into a first portion that includes computer vision processing (CVP) circuitry 60 and a separate second portion that includes high quality (HQ) pipeline 72. In other words, CVP circuitry 60 and HQ pipeline 72 can sometimes collectively be referred to and defined herein as image signal processing (ISP) circuitry. Images and/or data output from sensors 50 and 54 that only need to be analyzed for contextual purposes may be processed using only CVP circuitry 60 (e.g., without being processed by the high quality pipeline 72), whereas images and/or data output from sensors 50 and 54 that will be output on displays 20 for human viewing may be processed by CVP circuitry 60 and high quality pipeline 72. Components within CVP circuitry 60 may be operated in a first power domain, whereas components within HQ pipeline 72 may be operated in a second power domain different from the first power domain (e.g., CVP circuitry 60 and HQ pipeline 72 may be configured to operate in different power domains).

Components in CVP circuitry 60 may generally operate in a lower power domain relative to the components in HQ pipeline 72. High quality pipeline 72 can be power gated (e.g., HQ pipeline 72 can be selectively activated and deactivated to reduce the overall power consumption). When processing images to be output on displays 20 for human consumption, high quality pipeline 72 may be selectively activated (e.g., powered on) to perform some or all of the image processing functions provided by HQ pipeline 72. When processing images for only contextual purposes (e.g., to support one or more computer vision algorithms running on device 10) without having to display such images, HQ pipeline 72 can be selectively deactivated (e.g., powered off or idled) to conserve power. In other words, CVP circuitry 60, when activated, consumes a first amount of power, whereas HQ pipeline 72, when activated, consumes a second amount of power greater than the first amount of power. Operating the image signal processing circuitry on device 10 in this way can be technically advantageous to minimize power consumption on device 10. Such reduced power operation can be beneficial for small, lightweight device 10 that might be powered by a battery for all-day usage.

As shown in FIG. 2, CVP circuitry 60 may include one or more hardware and/or software subsystems such as a sensor interface 62, a front-end (FE) processor 64, a statistics front-end (FE) processor 66, a statistics back-end (BE) processor 68, a central processing unit (CPU) such as computer vision processing (CVP) CPU 70, and/or other image signal processing components. Sensor interface 62 can be configured to receive images (e.g., raw pixel data) from cameras 50, tracking sensors 54, and/or other image sensors within device 10. Front-end processor 64 can be configured to perform bad/defective pixel correction, image scaling or binning operations, image cropping or resizing, and/or other front-end or image pre-processing operations. Statistics FE processor 66 may be configured to collect pixel statistical information such as minimum pixel values, maximum pixel values, average pixel values, color plane information (e.g., red, green, and blue color planes), color and/or brightness histograms, and other front-end image statistics. Statistics BE processor 68 may be configured to convert an image from the raw Bayer domain to a color image and can generate additional statistical information.

The color image output from statistics BE processor 68 may be provided to one or more downstream computer vision processing algorithms or tasks running on device 10 (e.g., processor 68 may output an image to one or more client processors). Statistics FE processor 66 and BE processor 68 may be referred to collectively as a CVP statistics pipeline. Although CVP circuitry 60 is shown as including a single instance of interface 62, processor 64, processor 66, and processor 68, CVP circuitry 60 can include multiple sensor interface blocks 62 for interfacing with multiple sensors, multiple front-end processors 64 for performing image pre-processing operations in parallel, multiple processors 66 for performing front-end statistical computations in parallel, and/or multiple processors 68 for performing back-end statistical computations in parallel. Computer vision processing CPU 70 can be configured to manage and coordinate the operations of blocks 62, 64, 66, and 68 for processing each incoming image frame.

Computer vision processing circuitry 60 primarily includes components for performing front-end image signal processing operations. Computer vision processing circuitry 60 is therefore sometimes referred to and defined herein as "front-end" image signal processing (ISP) circuitry. In contrast, HQ pipeline 72 primary includes components configured to perform back-end image signal processing operations. High quality pipeline 72 is therefore sometimes referred to and defined herein as "back-end" image signal processing (ISP) circuitry. High quality (back-end) pipeline 72 may be a more complex and higher-power-consuming version of the statistics back-end processor 68 of CVP circuitry 60. For example, HQ pipeline 72 may include components configured to perform bad/defective pixel correction, noise reduction, white balancing, demosaicing, color space conversion, tone mapping (e.g., including global and local tone mapping), color correction, gamma correction, shading correction, image sharpening, high dynamic range (HDR) correction, edge-aware local image adjustments, image fusion (e.g., fusing multiple image frames together for noise reduction and high dynamic range), image signal processing operations entirely absent from CVP circuitry 60, and/or other image signal processing functions to output a corresponding image for display.

Image(s) output by the back-end processor 68 of CVP circuitry 60 may be processed in accordance with a first set of image processing requirements that can optionally produce a lower fidelity (quality) image for computer vision consumption, whereas image(s) output by the HQ pipeline 72 may be processed in accordance with a second set of image processing requirements different than the first set of image processing requirements that can optionally produce a comparatively higher fidelity (quality) image to be displayed for human consumption. In some embodiments, the CVP circuitry 60 can be configured to output a processed image having a first quality and/or using a first amount of power, whereas HQ pipeline 72 can be configured to output a processed image having a second quality greater than the first quality and/or using a second amount of power greater than the first amount of power. In some embodiments, CVP circuitry 60 can be configured to output a processed image by performing a first set of image processing operations, whereas HQ pipeline 72 can be configured to output a processed image by performing additional image processing operations different than the first set of image processing operations. Images output by processor 68 can be provided as results to one or more client processors. The example of FIG. 2 in which HQ pipeline 72 can output content for human consumption via display(s) 20 is illustrative. Display 20 is optional and can be omitted from device 10. If desired, the content output from HQ pipeline 72 can be stored in memory for later processing.

In other types of mobile electronic devices such as a smartphone with a camera, a user typically opens a camera application and is presented with a preview of the image to be captured prior to pressing a capture button. In such scenarios, the smartphone can determine with a high likelihood that the user is about to press the capture button and can prepare itself for an image capture by preemptively waking up all the necessary hardware and/or software subsystems needed for an image capture.

In contrast to capturing an image on a smartphone, a user operating device 10 can initiate or trigger an image capture without necessarily opening up a camera (image capture) application. In other words, device 10 might not know a priori when the user will be pressing a capture button. Device 10, which as described above can be a lightweight head-mounted device with low power consumption for all-day usage, may include one or more processors at least some of which can be operated in a sleep mode to reduce active power consumption.

For example, device 10 can include an application processor on which an operating system of device 10 is executed. The application processor should be operated in the sleep mode most of the time to save power. Pressing a capture button, which can occur at any time based on a user's whim, may trigger the application processor to wake up. Waiting for the application processor to fully awake before allowing the camera to capture an image can, however, introduce substantial shutter lag. "Shutter lag" can refer to and be defined herein as the delay between pressing the capture (shutter) button and the moment the image is actually captured at the camera.

In accordance with an embodiment, a method of operating device 10 is provided that reduces shutter lag. Device 10 can leverage an always-on processor to monitor for a button press and in response to detecting the button press, wake up an application processor and, in-parallel with the application processor waking up, prepare the camera pipeline for an image capture even before the application processor is fully awake. For example, the camera pipeline can begin capturing one or more images and start processing the captured images before the application processor is ready to handle the images. The term "camera pipeline" or camera stack can refer to all subsystems that are involved in capturing one or more images, which can include at least the outward-facing cameras 50, computer vision processing circuitry 60, high quality pipeline 72, associated memory devices for storing the captured image(s), and a camera driver (e.g., a software subsystem configured to orchestrate the operations of the image signal processing circuitry).

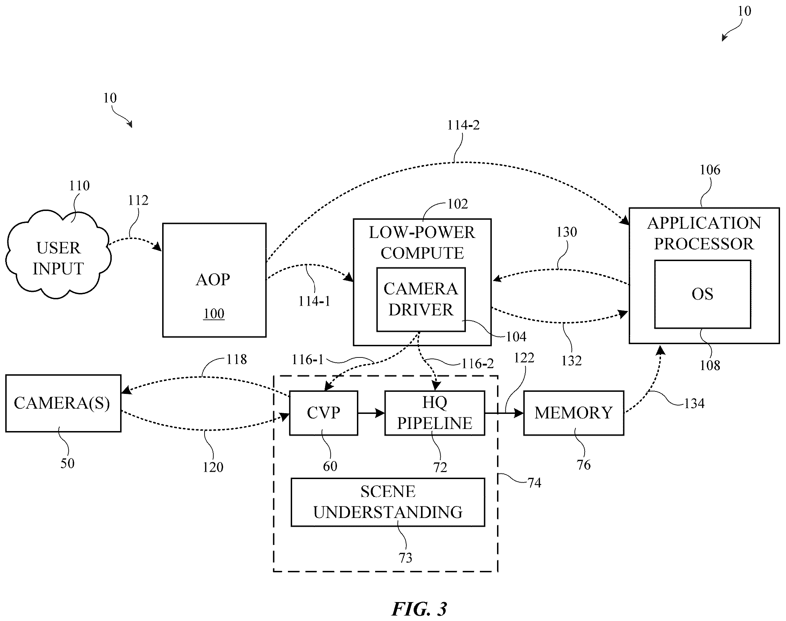

FIG. 3 is a diagram showing how device 10 can include multiple processors for orchestrating a low-latency image capture in accordance with some embodiments. As shown in FIG. 3, device 10 can include one or more camera(s) 50, computer vision processing circuitry 60, high quality pipeline 72, memory device 76, and one or more processing circuits such as processors 100, 102, and 106. Cameras 50 can be outward-facing image sensors configured to capture one or more images of a scene or physical environment. The captured images can be processed by computer vision processing (CVP) circuitry 60 and then by high quality pipeline 72. Computer vision processing circuitry 60 and high quality pipeline 72 can thus receive an incoming (raw) image and output a corresponding "processed" image. Computer vision processing circuitry 60 and high quality pipeline 72 configured to generate processed images are sometimes referred to collectively as image signal processing (ISP) circuitry 74. The processed images output from ISP circuitry 74 can be stored in memory 76. Memory device 76 can be part of a storage subsystem within control circuitry 16 (see FIG. 1). Memory device 76 can be implemented as volatile memory such as random-access memory (e.g., dynamic RAM or DRAM), non-volatile (persistent) memory such as flash memory, magnetic drives, optical drives, or solid state drives, or other types of storage devices.

Processor 106 may represent an application processor of device 10. Application processor 106 is sometimes referred to as application processing circuit 106. Application processor 106 may be configured to run or execute an operating system (OS) such as operating system 108 for device 10. Operating system 108 can be used to manage multiple applications running on device 10 such as allowing a user to switch between different applications (e.g., photo/video organization and editing applications, media streaming applications, gaming applications, social media applications, map/navigation applications, health and fitness applications, automated assistant applications, information searching applications, taxi hailing applications, online banking applications, etc.), to manage security features on device 10 such as performing biometric authentication for secure access and data encryption for safeguarding the user's data, and/or to manage productivity features such as a user's calendar, reminders, notes, and files, just to name a few. In general, operating system 108 can be designed to offer a secure and intuitive platform that prioritizes user experience, privacy, and seamless functionality across a wide variety of services and applications.

Application processor 106 that runs a full OS stack as described above can consume a substantial amount of power if kept active all the time. To help extend the battery life of device 10, application processor 106 can be configured in a sleep state when the applications running on device 10 are idle. Application processor 106 can thus toggle between the sleep state and a wake state. When one or more applications being managed by operating system 108 is needed or activated by the user, application processor 106 can wake up by transitioning from the sleep state to the wake state. The amount of time it takes for application processor 106 to transition from the sleep state to the wake state can sometimes be referred to herein as the application processor "wake time."

In contrast to application processor 106, processor 100 may always be powered on. For example, processor 100 may be a specialized, low-power processing subsystem designed to handle specific takes continuously without draining much battery power. Processor 100 remains active even when application processor 106 is in the sleep or idle state. Processor 100 operating at minimal power levels can be configured to handle lightweight tasks such as monitoring sensors (e.g., sensors 18 of FIG. 1, image sensors 50 and tracking sensors 54 of FIG. 2, and/or other sensors), monitoring voice commands (e.g., "Hey Siri" or other voice commands), managing notifications, and/or maintaining wireless connectivity for certain applications, just to name a few. Processor 100 of such type is sometimes referred to and defined herein as an "always-on" processor (AOP) or an "always-awake" processor. Always-on processor 100 is sometimes referred to as always-on processing circuit 100. Having an always-on processor 100 that is always (continuously or constantly) active as long as the battery is not completely drained ensures fast responses to user inputs or certain triggering events that would otherwise require the attention of processor 106 by eliminating the latency of waking up the main processor 106 (e.g., to bypass the application processor wake time). Offloading lightweight tasks from the main application processor 106 to always-on processor 100 is also technically advantageous and beneficial to help conserve energy while optimizing performance for the overall system 10.

Device 10 may further be provided with a low-power compute block such as low-power compute processor 102. Low-power compute processor 102 is sometimes referred to as low-power compute processing circuit 102. Low-power compute processor 102 may include a camera driver such as camera driver 104 configured to control the camera pipeline. Camera driver 104, sometimes referred to as an image sensor or image signal processing driver, is a software subsystem configured to orchestrate the operations of ISP circuitry 74. Processor 102 can directly access memory 76, which is sometimes referred to herein as an image storage circuit. Application processor 106 can access or retrieve stored images from memory 76 through low-power compute processor 102. Alternatively or additionally, application processor 106 can also directly access stored images on memory 76. Unlike processors 102 and 106, always-on processor 100 has no access to memory 76 (e.g., processor 100 should not be able to access the stored images). Processors 100, 102, and 106 configured to operate as such can be considered to have different memory access privileges. For instance, always-on processor 100 can have a first memory access privilege, application processor 106 may have a second memory access privilege that is equal to or greater than the first memory access privilege, and low-power compute processor 102 may have a third memory access privilege that is equal to or greater than the second memory access privilege.

Low-power compute processor 102 may be operable in a wake state or a sleep state. Processor 102 in the wake state may consume less power than application processor 106 in the wake state. Processor 102 in the wake state may consume more power than always-on processor 100. In general, application processor 106 may consume a first amount of power; low-power compute processor 102 may consume a second amount of power less than the first amount of power; and always-on processor may consume a third amount of power less than the second amount of power. In some embodiments, low-power compute processor 102 may consume a similar amount of power, when operated in the wake state, as always-on processor 100. While processor 102 can toggle between sleep (idle) and wake states, processor 100 is always active (e.g., processor 100 is always awake, but draining a small amount of power).

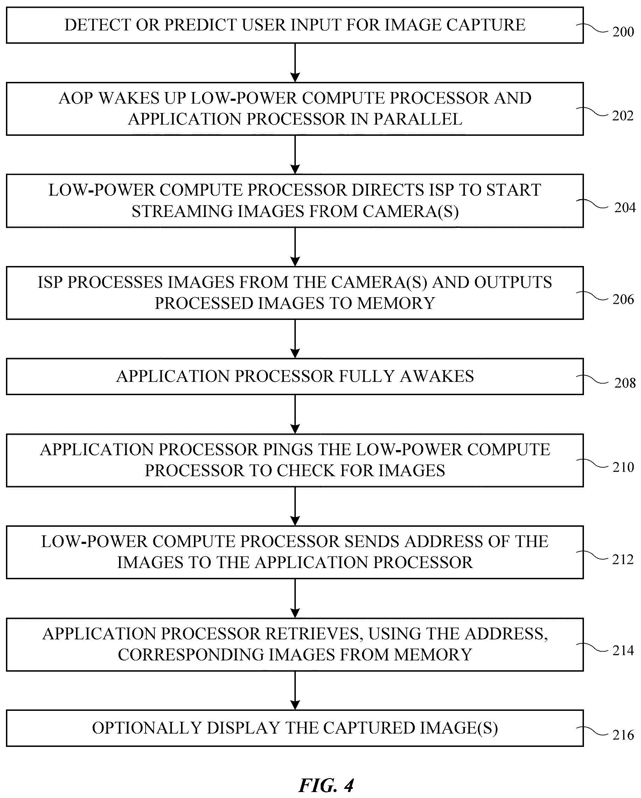

FIG. 4 is a flowchart of illustrative steps for operating device 10 of the type described in connection with FIGS. 1-3. During the operations of block 200, device 10 may detect or predict a user input for capturing an image. For example, always-on processor 100 can be configured to monitor a user input 110. User input 110 can be a button press (e.g., a user depressing or pushing a physical button on the housing or frame of device 10), a touch (e.g., a physical tap or pressure on a portion of the housing or frame of device 10), a voice command (e.g., asking Siri or other automated assistant to take a photo), a hand gesture (e.g., a gesture from the user's finger(s) or hand or other motion for triggering an image capture), and/or a remote trigger (e.g., using a remote controller that communicates wirelessly with device 10), just to name a few. In the examples above, such user input(s) 110 can be detected via a physical button, a virtual button, a touch sensor, a microphone, a motion sensor, or other types of sensors, which can then alert the always-on processor 100 of the user's intent to capture an image (as shown by arrow 112 in FIG. 3).

During the operations of block 202, the always-on processor 100 can be configured to wake up the low-power compute processor 102 (as shown by arrow 114-1 in FIG. 3) and concurrently wake up the application processor 106 (as shown by arrow 114-2 in FIG. 3). In other words, always-on processor 100 can wake up processor 102 and processor 106 from the sleep state in parallel. Prior to block 202, low-power processor 102 and application processor 106 may both be in the sleep (idle) state. After receiving a wake signal from processor 100, low-power compute processor 102 may begin waking up and transitioning to the wake (active) mode. Similarly, after receiving a wake signal from processor 100, application processor 106 may begin waking up and transitioning to the wake (active) mode.

As used herein, the term "concurrent" means at least partially overlapping in time. In other words, first and second events are referred to herein as being "concurrent" with each other if at least some of the first event occurs at the same time as at least some of the second event (e.g., if at least some of the first event occurs during, while, or when at least some of the second event occurs). First and second events can be concurrent if the first and second events are simultaneous (e.g., if the entire duration of the first event overlaps the entire duration of the second event in time) but can also be concurrent if the first and second events are non-simultaneous (e.g., if the first event starts before or after the start of the second event, if the first event ends before or after the end of the second event, or if the first and second events are partially non-overlapping in time). As used herein, the term "while" is synonymous with "concurrent."

Application processor 106 may have a first wake time, whereas low-power compute processor 102 may have a second wake time that is less than the first wake time. In other words, the low-power compute processor 102 can wake up faster than the application processor 106. During the operations of block 204, processor 102 may fully transition to the wake state and can then direct image signal processing circuitry 74 to begin streaming images from one or more camera(s) 50. To achieve this, camera driver 104 running on processor 102 can concurrently activate CVP circuitry 60 (as shown by arrow 116-1 in FIG. 3) and HQ pipeline 72 (as shown by arrow 116-2 in FIG. 3). Image signal processing circuitry 74 can then send a signal to camera 50 (as shown by arrow 118 in FIG. 3) which directs camera 50 to being capturing one or more images. The amount of time that has elapsed between the detection of the user input at block 200 and the actual image capture at block 204 is sometimes referred to and defined herein as "capture latency." Camera 50 can then output raw images to ISP circuitry 74, as shown by arrow 120 in FIG. 3.

Subsequent to receiving raw images from camera 50, CVP circuitry 60 can leverage at least some of its components such as statistics FE processor 66 and/or statistics BE processor 68 to perform camera adjustments including adjusting exposure (sometimes referred to as autoexposure), white balance (sometimes referred to as auto white balance), tone mapping, lens shading, lens correction, and/or other types of adjustments that can affect the final processed image. Using CVP circuitry 60 to begin analyzing the captured images and to perform operations such as autoexposure (AE) and auto white balance (AWB) can be technically advantageous and beneficial to obtain proper camera settings, enabling the overall camera pipeline to acquire properly exposed and more aesthetically pleasing images. The images processed by ISP circuitry 74 can be stored in memory 76, as shown by arrow 122 in FIG. 3 (see also operations of block 206 in FIG. 4).

At block 208, application processor 106 may fully awake (e.g., processor 106 finishes transitioning to the awake state). At this point, the main operating system 108 running on processor 106 may be fully operational and ready to handle desired tasks and workloads. Once application processor 106 is active, application processor 106 can be configured to immediately ping the low-power compute processor 102 to check for images (see operations of block 210). As illustrated by arrow 130 in FIG. 3, application processor 106 can output one or more pings to low-power compute processor 102 for retrieving or requesting one or more images from memory 76. Such pings output from application processor 106 are sometimes referred to as image requests.

During the operations of block 212, low-power compute processor 102 can send an address of the image(s) stored in memory 76 during block 206 in response to the image request pings, as shown by arrow 132 in FIG. 3. During the operations of block 214, application processor 106 can, using the address received from processor 102, access the corresponding images from memory 76 (e.g., memory 76 can output stored images to processor 106, as shown by arrow 134 in FIG. 3). This example in which the application processor 106 retrieves address information from low-power compute processor 102 and then uses the retrieved address information to access memory 76 is illustrative. In other embodiments, in response to receiving pings 130 from application processor 106, low-power compute processor 102 can retrieve the stored images from memory 76 and then forward the retrieved messages to application processor 106. If desired, other ways of retrieving and conveying the captured images to application processor 106 can be employed.

During the operations of block 216, device 10 can optionally display the captured images using displays 20 shown in FIG. 1. For example, application processor 106 can receive one or more captured images from memory 76 and then convey the captured image(s) to displays 20 for output. If desired, the captured image(s) can be stored in memory 76 for later (downstream) processing and/or can be conveyed to other external devices or to the cloud for online storage. Operating device 10 to capture an image, process the captured image, and then storing the processed image (and optionally displaying the stored image) in this way may be technically advantageous and beneficial to minimize shutter lag. The reduction of shutter lag can be achieved by using the always-on processor 100 to concurrently wake up application processor 106 and low-power compute processor 102, which preemptively kickstarts the image capture process even before processor 106 is fully awake. Displaying the captured image(s) locally at device 10 is exemplary. If desired, one or more images captured using the operations of FIG. 4 can be shared or otherwise transmitted to other computing devices (e.g., smartphones, tablets, laptop computers, desktop computers, wristwatches, other head-mounted devices, etc.) and viewed on the other computing devices.

The operations of FIG. 4 are illustrative. In some embodiments, one or more of the described operations may be modified, replaced, or omitted. In some embodiments, one or more of the described operations may be performed in parallel. In some embodiments, additional processes may be added or inserted between the described operations. If desired, the order of certain operations may be reversed or altered and/or the timing of the described operations may be adjusted so that they occur at slightly different times. In some embodiments, the described operations may be distributed in a larger system.

The operations of FIG. 4 in which the always-on processor 100 is configured to wake up the low-power compute processor 102 and the application processor 106 in parallel in response to detecting a user input for image capture are illustrative and not intended to limit the scope of the present embodiments. In certain embodiments, it may be desirable to begin capturing images even before a user input is actually detected by device 10. For example, device 10 can be configured to capture a live image. A "live image" or "live photo" can refer to or be defined herein as a short video clip that includes images (and optionally audio information) taken before and after an image capture input. For example, a live image may include one to two seconds of video footage before a button press and one to two seconds of video footage after the button press.

In a handheld smartphone, capturing a live photo is typically preceded by a user opening up a camera application and previewing an image to be captured prior to pressing the capture button. In such scenarios, the camera application, upon being launched, can begin capturing video footage for the live image prior to the actual button press. The sequence for triggering an image capture, however, might be different for a head-mounted device 10. Unlike a handheld smartphone, an image capture may be triggered on head-mounted device 10 without first opening up a camera application. Head-mounted device 10 has limited battery capacity, so it would be impractical, from a power standpoint, to continuously capture images as a way to support live photo capture. For instance, there needs to be a way for device 10 to react immediately to a button press without the user first opening up a camera application. It is within such context that the following embodiments arise.

In accordance with some embodiments, head-mounted device 10 can be operated to capture a live image by acquiring and storing a plurality of images in a ring buffer. In FIG. 3, memory 76 can be implemented as a ring buffer. A "ring buffer" can refer to and be defined herein as a fixed-sized buffer configured to store a continuous data stream in a circular manner. A ring buffer is thus sometimes referred to as a circular buffer. Data can be stored on the ring buffer in a first in, first out (FIFO) basis and can wrap around from the tail back to its head when it reaches the end. Such type of storage structure can be used to provide buffering for video/audio playback for the live image. In particular, device 10 can be configured to preemptively begin capturing images and filling the ring buffer in response to predicting or otherwise anticipating that the user is about to capture an image.

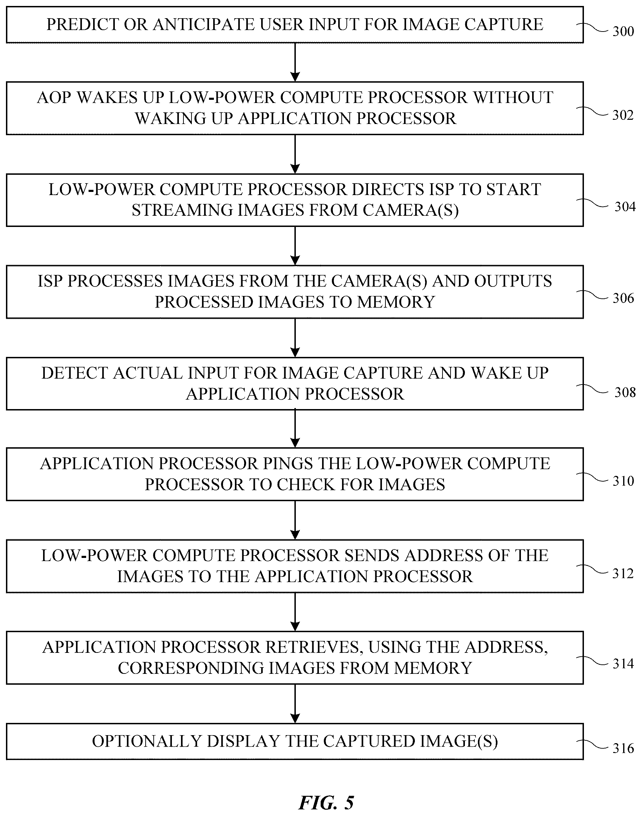

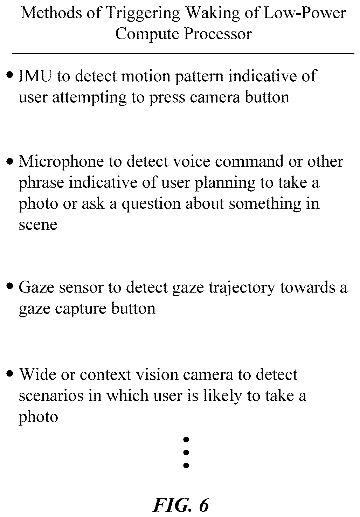

FIG. 5 is a flowchart of illustrative steps for predicting image capture prior to detecting a user input in accordance with some embodiments. The term "predict" in this context may refer to a step of anticipating or forecasting an image capture input before the actual image capture input occurs. During the operations of block 300, device 10 can be configured to predict or anticipate a user input for image capture. Device 10 can be configured to predict or anticipate a user input for image capture in various ways. FIG. 6 is a diagram showing various ways for predicting or anticipating an image capture user input. As an example, one or more tracking sensors 54 such as an inertial measurement unit (IMU) can be configured to detect a motion pattern that is indicative of a user attempting to press a physical camera button on the housing of head-mounted device 10. The IMU can detect a motion pattern that is indicative of the user putting his hand(s) or finger(s) on the housing or frame of device 10. The IMU can detect a motion pattern that is indicative of the user attempting to find, squeeze, or otherwise trigger a physical camera button on the housing or frame of device 10. The IMU can optionally detect other motion pattern that is indicative or anticipatory of a physical button press on device 10.

As another example, device 10 can include a microphone configured to detect a voice command or other language indicative of the user planning to capture an image or ask a question about something in the physical scene. In general, components 18 in FIG. 1 can include one or more microphones for such purpose. The one or more microphones in device 10 can predict or anticipate a probable scenario for an image capture by detecting a key phrase such as "Siri" or "Hey Siri" spoken from the user. In such instances, Siri or other automated voice assistant running on device 10 may be directed by the user to subsequently capture a live photo or analyze one or more portions or objects in the scene. Additionally or alternatively, the one or more microphones in device 10 can predict or anticipate a probable scenario for an image capture by detecting other phrases such as "say cheese," "look over here," "smile," "1, 2, 3," "do something silly," "get closer," or other word(s) typically spoken immediately prior to an image capture.

As another example, one or more tracking sensors 54 such as an inward-facing gaze sensor can be configured to detect a gaze trajectory and to determine if the gaze trajectory is trending towards a gaze capture button presented by display 20 of device 10. A "gaze capture" button may refer to a graphical user interface element output by display 20, which is generally disposed in a peripheral region of the user's field of view. The gaze capture button is sometimes referred to as a virtual button. An image capture can be triggered when the user's gaze is aligned with the gaze capture button element for a certain period of time or in conjunction with another user input such as a finger pinch or tap or other hand/finger gesture. Thus, the gaze sensor can be used to detect when the user's point of gaze is traveling towards a location of the gaze capture button, which is indicative or anticipatory of a subsequent gaze-triggered image capture.

As another example, one or more of the outward-facing cameras on device 10 can be configured to detect scenarios in which a user is likely to capture an image. For instance, device 10 can include at least one wide-angle camera 50 (see FIG. 2) that is configured to capture a wide-angle image. The wide-angle camera can have a focal length that is less than 24 mm, less than 20 mm, less than 16 mm, or less than 10 mm. Such wide-angle camera is sometimes referred to as an ultra-wide-angle image sensor, a super-wide-angle image sensor, or a fisheye image sensor. The wide-angle camera can be configured to periodically capture an image of the scene (e.g., once per second, once every two to three seconds, once every three to five seconds, once every five to ten seconds, etc.) to determine whether device 10 is currently being operated in a context in which a photo is likely to be taken. Such wide-angle camera is sometimes referred to as a "context vision" image sensor. For instance, contexts or scenarios in which a photo is likely to be taken can include: when multiple faces are detected within an image frame, when the user is out with a group of friends, when the user is on a hike or jog, when a birthday cake is detected in an image frame, when food is detected in an image frame, when a stage is detected within an image frame, when flowers, sunsets, or animals are detected in an image frame, just to name a few. Such wide-angle camera may be part of a context vision subsystem, which can include a scene understanding block for analyzing the contents of each frame being captured by the wide-angle camera. FIG. 3 shows how scene understanding block 73 can be part of image signal processing circuitry 74. In certain embodiments, the scene understanding block can be considered part of control circuitry 16 in FIG. 1.

Scene understanding block 73 can be a software and/or hardware component configured to interpret and comprehend the contents of an image. The scene understanding block can be a machine learning based component such as a neural network that has been trained on a large database of real-world or synthesized images. As an example, the scene understanding block can be configured to perform semantic segmentation (e.g., to divide an image into distinct regions or segments, where each segment corresponds to a particular object or class of objects) on one or more of the camera images. Semantic segmentation can be used to distinguish between walls, floors, ceilings, table or countertops, display panels, projection screens, touch screens, and/or other planar or curved surfaces. Semantic segmentation can, via feature extraction techniques, assign a label to every pixel in an image to provide a detailed understanding of the scene. As other examples, the scene understanding block can be configured to detect and track various types of objects in an image (e.g., to identify and track objects in the real-world environment such as to recognize specific objects, surfaces, or even people), to detect surfaces (e.g., to determine the characteristic and layout of surfaces such as walls, tables, display panels, and other surfaces), to detect the location of the user and objects in an image within the user's environment (e.g., to estimate the distance of objects or to obtain depth information), to detect whether a moving object is a dog, etc.), and/or to maintain a representation of the user's environment over time.

If desired, other ways of predicting image capture can be employed. Referring back to the flowchart of FIG. 5, processing can then proceed to block 302 after predicting a user input for image capture. During the operations of block 302, the always-on processor 100 can be configured to wake up the low-power compute processor 102 (as shown by arrow 114-1 in FIG. 3) and without waking up the application processor 106. In other words, processor 100 can first wake up processor 102 before waking up processor 106. Prior to block 302, low-power processor 102 and application processor 106 may both be in the sleep (idle) state. After receiving a wake signal from processor 100, low-power compute processor 102 may begin waking up and transitioning to the wake (active) mode. Application processor 106 may remain in the sleep state.

During the operations of block 304, processor 102 may fully transition to the wake state and can then direct image signal processing circuitry 74 to begin streaming images from one or more camera(s) 50. To achieve this, camera driver 104 running on processor 102 can concurrently activate CVP circuitry 60 (as shown by arrow 116-1 in FIG. 3) and HQ pipeline 72 (as shown by arrow 116-2 in FIG. 3). Image signal processing circuitry 74 can then send a signal to camera 50 (as shown by arrow 118 in FIG. 3) which directs camera 50 to being capturing one or more images. Camera 50 can then output raw images to ISP circuitry 74, as shown by arrow 120 in FIG. 3.

Subsequent to receiving raw images from camera 50, CVP circuitry 60 can leverage at least some of its components such as statistics FE processor 66 and/or statistics BE processor 68 to perform camera adjustments including adjusting exposure (sometimes referred to as autoexposure), white balance (sometimes referred to as auto white balance), tone mapping, lens shading, lens correction, and/or other types of adjustments that can affect the final processed image. Using CVP circuitry 60 to begin analyzing the captured images and to perform operations such as autoexposure (AE) and auto white balance (AWB) can be technically advantageous and beneficial to obtain proper camera settings, enabling the overall camera pipeline to acquire properly exposed and more aesthetically pleasing images. The images processed by ISP circuitry 74 can be stored in memory 76, as shown by arrow 122 in FIG. 3 (see also operations of block 306 in FIG. 5). Memory 76 can include a ring buffer configured to capture a live image or live photo.

During the operations of block 308, device 10 may detect an actual user input for image capture. For example, always-on processor 100 can be configured to monitor a user input 110 as shown in FIG. 3. User input 110 can be a button press (e.g., a user depressing or pushing a physical button on the housing or frame of device 10), a touch (e.g., a physical tap or pressure on a portion of the housing or frame of device 10), a voice command (e.g., asking Siri or other automated assistant to take a photo), a hand gesture (e.g., a gesture from the user's finger(s) or hand or other motion for triggering an image capture), and/or a remote trigger (e.g., using a remote controller that communicates wirelessly with device 10), just to name a few. In the examples above, such user input(s) 110 can be detected via a physical button, a virtual button, a gaze capture button, a touch sensor, a microphone, a motion sensor, or other types of sensors, which can then alert the always-on processor 100 of the user's intent to capture an image (as shown by arrow 112 in FIG. 3). In response to detecting the user's input, processor 100 can then subsequently wake up application processor 106.

At block 310, application processor 106 may fully awake (e.g., processor 106 finishes transitioning to the awake state). At this point, the main operating system 108 running on processor 106 may be fully operational and ready to handle desired tasks and workloads. Once application processor 106 is active, application processor 106 can be configured to immediately ping the low-power compute processor 102 to check for images (see operations of block 310). As illustrated by arrow 130 in FIG. 3, application processor 106 can output one or more pings to low-power compute processor 102 for retrieving or requesting one or more images from memory 76. Such pings output from application processor 106 are sometimes referred to as image requests.

During the operations of block 312, low-power compute processor 102 can send an address of the image(s) stored in memory (ring buffer) 76 during block 306 in response to the image request pings, as shown by arrow 132 in FIG. 3. During the operations of block 314, application processor 106 can, using the address received from processor 102, access the corresponding images from memory 76 (e.g., ring buffer 76 can output stored images to processor 106, as shown by arrow 134 in FIG. 3). This example in which the application processor 106 retrieves address information from low-power compute processor 102 and then uses the retrieved address information to access memory 76 is illustrative. In other embodiments, in response to receiving pings 130 from application processor 106, low-power compute processor 102 can retrieve the stored images from memory 76 and then forward the retrieved messages to application processor 106. If desired, other ways of retrieving and conveying the captured images to application processor 106 can be employed.

During the operations of block 316, device 10 can optionally display the captured images using displays 20 shown in FIG. 1. For example, application processor 106 can receive one or more captured images from memory 76 and then convey the captured image(s) to displays 20 for output (e.g., to display video footage associated with the captured live photo). If desired, the captured image(s) can be stored in memory 76 for later (downstream) processing and/or can be conveyed to other external devices or to the cloud for online storage. Operating device 10 to capture multiple images for a live photo, process the captured images, and then storing the processed images (and optionally displaying the live photo) in this way may be technically advantageous and beneficial to capture a live photo while minimizing power consumption. Predicting an image capture prior to an actual user input can help preemptively kickstart the image capture process even before the actual user input so that footage prior to the user input can be obtained for the live photo. Displaying the captured image(s) locally at device 10 is exemplary. If desired, one or more images captured using the operations of FIG. 5 can be shared or otherwise transmitted to other computing devices (e.g., smartphones, tablets, laptop computers, desktop computers, wristwatches, other head-mounted devices, etc.) and viewed on the other computing devices.

The operations of FIG. 5 are illustrative. In some embodiments, one or more of the described operations may be modified, replaced, or omitted. In some embodiments, one or more of the described operations may be performed in parallel. In some embodiments, additional processes may be added or inserted between the described operations. If desired, the order of certain operations may be reversed or altered and/or the timing of the described operations may be adjusted so that they occur at slightly different times. In some embodiments, the described operations may be distributed in a larger system.

In accordance with an embodiment, a head-mounted device includes: one or more image sensors; a first processing circuit configured to run an operating system for the head-mounted device; a second processing circuit configured to direct the one or more image sensors to capture images; one or more components configured to predict a user input for image capture; and a third processing circuit configured to wake up the second processing circuit from a sleep state in response to predicting the user input for image capture.

In accordance with another embodiment, the third processing circuit is further optionally configured to detect the user input for image capture and to subsequently wake up the first processing circuit from a sleep state in response to detecting the user input for image capture, and the one or more image sensors are optionally configured to begin capturing images before the third processing circuit detects the user input for image capture.

In accordance with another embodiment, the head-mounted device optionally includes image signal processing (ISP) circuitry configured to receive and process images output from the one or more image sensors, where the second processing circuit is operable between the sleep state and a wake state and includes a camera driver for controlling the image signal processing circuitry, and where the one or more image sensors is configured to output images to the ISP circuitry before the third processing circuit detects the user input for image capture.

In accordance with another embodiment, the image signal processing circuitry optionally includes: computer vision processing circuitry configured to receive images from the one or more image sensors and having a plurality of subsystems configured to operate in a first power domain; and a back-end image signal processing pipeline coupled to the computer vision processing circuitry and configured to operate in a second power domain different than the first power domain.

In accordance with another embodiment, the head-mounted device optionally includes a ring buffer configured to receive and store images output from the back-end image signal processing pipeline, where the second processing circuit is optionally operable to access the ring buffer and where the third processing circuit cannot access the ring buffer.

In accordance with another embodiment, the first processing circuit optionally includes an application processor configured to run one or more applications with the operating system and is operable between the sleep state and a wake state.

In accordance with another embodiment, the third processing circuit optionally includes a processor that is continuously in the wake state.

In accordance with another embodiment, the one or more components for predicting the user input for image capture optionally includes an inertial measurement unit (IMU) configured to detect a motion pattern indicative of a button press at the head-mounted device.

In accordance with another embodiment, the one or more components for predicting the user input for image capture optionally includes a microphone configured to detect a phrase preceding an image capture.

In accordance with another embodiment, the one or more components for predicting the user input for image capture optionally includes a gaze sensor configured to detect a point of gaze moving towards a virtual button presented by a display of the head-mounted device.

In accordance with another embodiment, the one or more components for predicting the user input for image capture optionally includes a context vision subsystem configured to detect a scenario in which an image is likely to be taken.

In accordance with an embodiment, a method of operating a head-mounted device having a first processor, a second processor, and a third processor includes: predicting a user input for image capture; with the third processor, waking up the second processor in response to predicting the user input for image capture; in response to the second processor waking up from a sleep state to a wake state, using a camera driver running on the second processor to direct one or more image sensors to begin capturing images; and with the third processor, detecting the user input for image capture after the one or more image sensors have begun capturing images.

In accordance with another embodiment, the method optionally includes: with the third processor, waking up the first processor in response to detecting the user input for image capture.

In accordance with another embodiment, detecting the user input for image capture optionally includes detecting depression of a button on the head-mounted device.

In accordance with another embodiment, predicting the user input for image capture optionally includes using an inertial measurement unit (IMU) to detect a motion pattern indicative of a button press at the head-mounted device.

In accordance with another embodiment, predicting the user input for image capture optionally includes using a microphone to detect a phrase preceding an image capture.

In accordance with another embodiment, predicting the user input for image capture optionally includes using a gaze sensor to detect a point of gaze moving towards a virtual button presented by a display of the head-mounted device.

In accordance with another embodiment, predicting the user input for image capture optionally includes using a context vision subsystem to detect a scenario in which an image is likely to be taken.

In accordance with an embodiment, a method of operating a head-mounted device having a first processor, a second processor, and a third processor includes: predicting an event; with the third processor, waking up the second processor in response to predicting the event without waking up the first processor; and with the third processor, detecting an occurrence of the event and subsequently waking up the first processor in response to detecting the occurrence of the event.

In accordance with another embodiment, the event optionally includes a user input for image capture; the first processor optionally includes an application processor configured to run an operating system for the head-mounted device; the second processor, upon waking up, optionally directs one or more image sensors in the head-mounted device to begin capturing images; and the one or more image sensors optionally begin capturing images before the third processor detects the occurrence of the event.

The foregoing is merely illustrative and various modifications can be made to the described embodiments. The foregoing embodiments may be implemented individually or in any combination. The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A head-mounted device comprising:
one or more image sensors;
a first processing circuit configured to run an operating system for the head-mounted device;
a second processing circuit configured to direct the one or more image sensors to capture images;
one or more components configured to predict a user input for image capture; and
a third processing circuit configured to wake up the second processing circuit from a sleep state in response to predicting the user input for image capture.

2. The head-mounted device of claim 1, wherein the third processing circuit is further configured to detect the user input for image capture and to subsequently wake up the first processing circuit from a sleep state in response to detecting the user input for image capture, and wherein the one or more image sensors are configured to begin capturing images before the third processing circuit detects the user input for image capture.

3. The head-mounted device of claim 2, further comprising:
image signal processing (ISP) circuitry configured to receive and process images output from the one or more image sensors, wherein the second processing circuit is operable between the sleep state and a wake state and comprises a camera driver for controlling the image signal processing circuitry, and wherein the one or more image sensors is configured to output images to the ISP circuitry before the third processing circuit detects the user input for image capture.

4. The head-mounted device of claim 3, wherein the image signal processing circuitry comprises:
computer vision processing circuitry configured to receive images from the one or more image sensors and having a plurality of subsystems configured to operate in a first power domain; and
a back-end image signal processing pipeline coupled to the computer vision processing circuitry and configured to operate in a second power domain different than the first power domain.

5. The head-mounted device of claim 4, further comprising:
a ring buffer configured to receive and store images output from the back-end image signal processing pipeline, wherein the second processing circuit is operable to access the ring buffer and wherein the third processing circuit cannot access the ring buffer.

6. The head-mounted device of claim 1, wherein the first processing circuit comprises an application processor configured to run one or more applications with the operating system and is operable between the sleep state and a wake state.

7. The head-mounted device of claim 1, wherein the third processing circuit comprises a processor that is continuously in the wake state.

8. The head-mounted device of claim 1, wherein the one or more components for predicting the user input for image capture comprises an inertial measurement unit (IMU) configured to detect a motion pattern indicative of a button press at the head-mounted device.

9. The head-mounted device of claim 1, wherein the one or more components for predicting the user input for image capture comprises a microphone configured to detect a phrase preceding an image capture.

10. The head-mounted device of claim 1, wherein the one or more components for predicting the user input for image capture comprises a gaze sensor configured to detect a point of gaze moving towards a virtual button presented by a display of the head-mounted device.

11. The head-mounted device of claim 1, wherein the one or more components for predicting the user input for image capture comprises a context vision subsystem configured to detect a scenario in which an image is likely to be taken.

12. A method of operating a head-mounted device having a first processor, a second processor, and a third processor, the method comprising:
predicting a user input for image capture;
with the third processor, waking up the second processor in response to predicting the user input for image capture;
in response to the second processor waking up from a sleep state to a wake state, using a camera driver running on the second processor to direct one or more image sensors to begin capturing images; and
with the third processor, detecting the user input for image capture after the one or more image sensors have begun capturing images.

13. The method of claim 12, further comprising:
with the third processor, waking up the first processor in response to detecting the user input for image capture.

14. The method of claim 13, wherein detecting the user input for image capture comprises detecting depression of a button on the head-mounted device.

15. The method of claim 12, wherein predicting the user input for image capture comprises one or more of:
using an inertial measurement unit (IMU) to detect a motion pattern indicative of a button press at the head-mounted device;
using a microphone to detect a phrase preceding an image capture
using a gaze sensor to detect a point of gaze moving towards a virtual button presented by a display of the head-mounted device; and
using a context vision subsystem to detect a scenario in which an image is likely to be taken.
